# EUROPEAN PATENT APPLICATION

(11) **EP 1 916 445 A1**
(43) Date of publication of application: **30.04.2008**
(21) Application number: 06255500.8
(22) Date of filing: 26.10.2006
(51) Int. Cl.: F16H 3/12, F16H 63/34

(54) **Gearbox with shift prevention mechanism**

(71) Applicant: Turner Powertrain Systems Limited, Racecourse Road West Midlands Wolverhamptom, WV6 0QT (GB)
(72) Inventor: Birkel, Jeff, Wolverhampton, WV6 0QT (GB); Griffiths, Alan, Wolverhampton, WV6 0QT (GB)
(74) Representative: Hendry, Niall James

(57) **Abstract**

A gearbox (10) has at least two gears (20a,20b) and comprises a shift selector, a first clutch mechanism (16), a first gearshaft (14) and a second gearshaft (20) selectively engagable with the first gearshaft (14) via the at least two gears (20a,20b). The gearbox (10) also has a shift prevention mechanism adapted to hold the shift selector so as to prevent entry of the shift selector into a second position corresponding with the engagement of a second gear (20b) from a first position corresponding with the engagement of a first gear (20a) unless the rotational speeds of the first gearshaft (14) and second gearshaft (20) are within a predetermined range. A controller is provided for the control of the shift prevention mechanism and for adjusting the speeds of the first and/or second gearshafts (14,20). A method of shifting from the first gear (20a) to the second gear (20b) using the shift prevention mechanism is also described.

## Description

### Field of the Invention

The present invention is directed to gearboxes for vehicles. More specifically, the present invention is directed to a method and apparatus of preventing shifts in a gearbox until suitable conditions for the shift are present.

### Background of the Invention

Conventional gearboxes for vehicles employ synchroniser rings to ensure smooth shifts between gears in the gearbox. The synchroniser rings ensure that the shift collar and desired gear make frictional contact before the teeth of the collar engage the gear. In this way, the rotational speeds of the gearshafts in the gearbox are progressively synchronised, thereby allowing a gearshift to take place without any mis-engagement of the collar teeth and desired gear.

A disadvantage of synchroniser rings is that they add significantly to the cost of manufacture of a gearbox. There have therefore been a number of proposals put forward in order to remove the need for synchroniser rings in gearboxes. In removing the synchroniser rings, there is a need to ensure synchronisation of the rotational speeds of the gearshafts in another way before a gearshift can be allowed to take place. Otherwise, the mis-engagement problem referred to above can still occur, leading to problems in achieving a shift and also potentially damaging the gearbox components. Therefore, when removing the synchroniser rings from a gearbox it is important to ensure that a shift cannot take place until the synchronisation of the gearshaft speeds has occurred.

Shift prevention mechanisms for synchroniser-less gearboxes have been previously proposed. GB1031847 discloses an electro-magnetic arrangement which prevents movement of the shift rod in a gearbox until the rotational speeds of the gearshafts are synchronised. A drawback of this system is that it requires the vehicle operator to depress a switch on the gearstick in order to prime the shift prevention mechanism for deactivation. The shift prevention mechanism will not disengage a detent holding the shift rod unless (i) the operator depresses the switch and (ii) the rotational speeds of the gearshafts are synchronised. As a result, if the operator inadvertently fails to operate the switch, the gearstick will not move and effect a gearshift, even if the gearshaft speeds are synchronised. If such an unexpected event occurs on a regular basis, this could increase operator fatigue and in certain circumstances could lead to the operator losing of control of the vehicle.

A further disadvantage of the arrangement disclosed in GB '847 is that the shift rod and gearstick are locked until the rotational speeds of the gearshafts are synchronised. In other words, the operator cannot move the gearstick out of gear and into neutral until the speeds are synchronised. This can also increase operator fatigue, as when they feel the gearstick locked it is natural for the operator to apply more force in an effort to shift the gear.

It is an aim of the present invention to obviate or mitigate one or both of the aforementioned disadvantages.

### Summary of the Invention

According to a first aspect of the present invention, there is provided a method of shifting from a first gear to a second gear in a gearbox. The gearbox comprises a shift selector, a first clutch mechanism, a first gearshaft, and a second gearshaft selectively engagable with the first gearshaft. The method comprises receiving a shift signal from the shift selector as the selector is moved from a first shift position corresponding with engagement of the first gear towards a second shift position corresponding with engagement of the second gear. The shift selector is held so as to prevent entry of the shift selector into the second shift position. The rotational speeds of the first gearshaft and second gearshaft of the gearbox are compared in order to determine whether the rotational speeds of the shafts are within a predetermined range of one another.
The shift selector is released once the rotational speeds of the shafts are within the predetermined range, so that the shift selector may move into the second shift position. Finally, the gearbox is shifted from the first gear to the second gear.

According to a second aspect of the present invention, there is provided a gearbox having at least two gears, and comprising a shift selector, a first clutch mechanism, a first gearshaft, and a second gearshaft selectively engagable with the first gearshaft via the at least two gears. Also provided is a shift prevention mechanism adapted to hold the shift selector so as to prevent entry of the shift selector into a second position corresponding with the engagement of a second gear from a first position corresponding with the engagement of a first gear to unless the rotational speeds of the first gearshaft and second gearshaft are within a predetermined range. A controller is adapted to control the shift prevention mechanism.

According to a third aspect of the present invention, there is provided a vehicle including a gearbox according to the second aspect of the invention.

### Brief description of the drawing

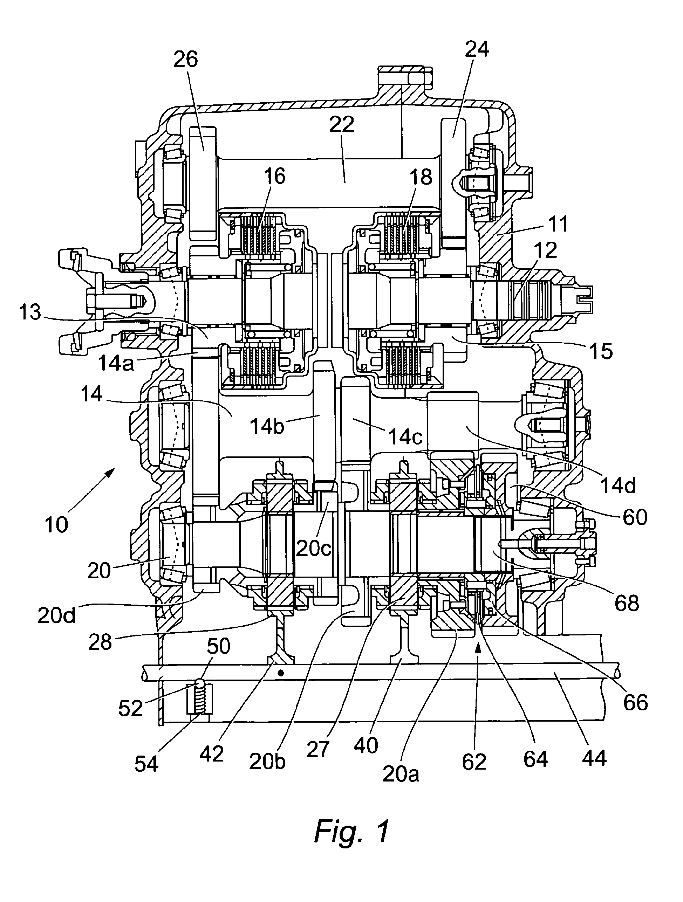

A preferred embodiment of the present invention will now be described, by way of example only with reference to the accompanying drawing, in which Figure 1 shows a schematic cut-away view of a gearbox.

### Detailed description of the drawing

The gearbox shown in Figure 1, and generally designated 10, comprises a housing 11 and a plurality of co-operating shafts rotatably supported therein. A power input shaft 12 is connected to an external motive power source, typically the crankshaft of an internal combustion engine (not shown). Located on the power input shaft 12 are first and second clutch mechanisms, also known as clutch packs, 16,18. The first clutch mechanism 16 is adapted to selectively engage the power input shaft 12 and a first gearshaft 14 and cause rotation of the first gearshaft 14 in a first direction. This is effected by way of a first clutch gear 13 whose teeth are permanently engaged with corresponding teeth on a first fixed gear 14a on the first gearshaft 14. When the first clutch mechanism 16 is disengaged, the power input shaft 12 does not rotate the first gearshaft 14, as there is no connection between the power input shaft 12 and the first clutch gear 13. When the first clutch mechanism 16 is engaged, the power input shaft 12 is connected to the first clutch gear 13 and hence the first gearshaft 14.

The second clutch mechanism 18 is adapted to selectively engage the power input shaft 12 and the first gearshaft 14 and cause rotation of the first gearshaft 14 in a second direction opposite to the first direction. This is effected by way of a second clutch gear 15 whose teeth are permanently engaged with the teeth of a first idler gear 24 fixed at a first end of an idler shaft 22. A second idler gear 26 is fixed to the opposite end of the idler shaft 22 and has teeth which are in permanent engagement with the teeth of the first fixed gear 14a on the first gearshaft 14.

For illustrative purposes, the idler shaft 22 has been shown in Figure 1 lying alongside the power input shaft 12. In reality, as will be appreciated by those skilled in the art, the idler shaft 12 is located in proximity to both the power input shaft 12 and first gearshaft 14 so that the idler gears 24,26 may engage the respective gears of those shafts, as described above.

When the second clutch mechanism 18 is disengaged, the power input shaft 12 does not rotate the idler shaft 22 and first gearshaft 14, as there is no connection between the power input shaft 12 and the second clutch gear 15. When the second clutch mechanism 18 is engaged, the power input shaft 12 is connected to the second clutch gear 15, the idler shaft 22 and hence the first gearshaft 14. By introducing the idler shaft 22, it will be clear that the direction of rotation of the first gearshaft 14 will be opposite to that when the first clutch mechanism 16 is engaged.

The illustrated embodiment of the gearbox is suitable for use in a vehicle or work machine which has a number of forward and reverse gears. Hence, the first clutch mechanism 16 can be considered to be the forward clutch and the second clutch mechanism 18 to be the reverse clutch. Whichever clutch is deployed will depend on the direction of travel of the vehicle. It will be appreciated that in normal operating conditions only one clutch mechanism 16,18 can be engaged at a time.

The first gearshaft 14 has a plurality of fixed gears 14a-14d fixed thereto. Each of the fixed gears 14a-14d is permanently engaged with a corresponding gear 20a-20d on a second gearshaft 20. In the conventional manner, each gear 20a-20d is supported on the second gearshaft 20 by a bearing (not shown). Thus, the gears 20a-20d can rotate independently of the second gearshaft 20. Also located on the second gearshaft 20 are a pair of shift collars 27,28 which rotate with the second gearshaft 20 but can move axially back and forth on the gearshaft 20 to engage respective pairs of gears. In the illustrated embodiment, the first collar 27 engages first and second gears 20a,20b, while the second collar 28 engages third and fourth gears 20c.20d.

Rotatably fixed to the second gearshaft 20 is an output gear 60. The output gear 60 is located on the end of the second gearshaft adjacent first gear 20a, and is engaged with a gear on a power output shaft (neither shown).

Along with first gear 20a, the output gear 60 makes up the other half of a third clutch mechanism 62. The side of first gear 20a facing the output gear 60 has a clutch plate 64 attached thereto, while the side of the output gear 60 facing first gear 20a has a pressure plate 66 attached thereto. In the same manner as the shift collars 27,28, the output gear rotates with the second gearshaft 20, but can move axially along the shaft 20. A hydraulic piston 68 can be selectively activated to move the output gear axially into and out of contact with first gear 20a.

Each shift collar 27,28 is attached to a respective shift rod via a shift fork 40,42. In the illustrated embodiment, only the second shift rod 44 associated with third and fourth gears 20c,20d is shown, as the first shift rod associated with first and second gears 20a,20b is hidden behind the second shift rod. However, the shift fork 40 associated with the first shift rod can be clearly seen. Each shift rod is preferably selectively connected to a gearstick (not shown) in a conventional manner, wherein the shift rods and gearstick form a shift selector.

Each of the shift rods is provided with a shift hold means adapted to selectively hold the shift rod from entering a desired gear. The shift hold means is preferably a detent comprising a groove 50 in the shift rod and a ball 52 adapted to be selectively received in the groove 50. Preferably, the ball 52 is biased towards the shift rod by a biasing means, most preferably a spring 54. The shift hold means also includes an actuator (not shown) adapted to selectively move the ball 52 out of the groove 50 against the force of the spring 54. The actuator is preferably electromagnetically or hydraulically operated.

A controller (not shown), preferably in the form of an electronic control unit (ECU), is provided to control the gearbox. Speed sensors (not shown) are used to monitor the rotational speeds of the first and second gearshafts 14,20 and relay those speeds to the controller. A shift position sensor (not shown) is also provided which detects the shift being made by an operator and again relays information concerning the shift to the controller. The controller is also in communication with the shift hold means and can actuate the shift hold means in order to release the shift rod so that a gearshift can be made. The first, second and third clutch mechanisms 16,18,62 are also controlled by signals from the controller.

### Industrial applicability

The following operating methodology is applied by the controller when the apparatus described above is in use.

Firstly, the operator will move the gearstick in order to make a gearshift. As the gearstick is moved, the shift sensor detects what the desired gear change is to be, and sends a signal which is received by the controller. At the same time, the relevant shift rod will be moved back into a neutral position already held by the remaining shift rods in the gearbox. In moving back into the neutral position, the shift rod allows the biased ball 52 to enter the groove 50 of the detent such that the shift hold means holds the shift rods in that position.

Whilst the shift rods are held in the neutral position by the shift hold means, the controller compares the rotational speeds of the first and second gearshafts 14,20 via signals from the speed sensors. If both shaft speeds are within a predetermined range where they are substantially synchronised, the controller will actuate the shift hold means in order to release the relevant shift rod. This allows the operator to move the gearstick and shift rod into position in order to shift into the desired new gear.

If the controller detects that the speeds of the first and second gearshafts 14,20 are outside of the predetermined range, and therefore not synchronised, it is necessary to adjust the speed of one or both of the gearshafts 14,20. One manner in which the controller can adjust the speed of the gearshafts 14,20 is by momentarily applying whichever clutch mechanism is not in operation. In other words, if the vehicle is moving forwards and the first clutch mechanism 16 is engaged, the controller can momentarily engage the second clutch mechanism 18. By momentarily engaging the second clutch mechanism 18, the second clutch 18 applies a frictional force to the power input shaft 12, with the result that both the power input shaft and the first gearshaft 14 slow down. Once the controller detects that the slowing of the first gearshaft 14 has brought the speeds of both gearshafts 14,20 into the predetermined range, it will allow the shift to take place as described above. The same technique can be applied when the second clutch mechanism 18 is engaged (i.e. the vehicle is travelling in reverse) but by momentarily engaging the first clutch mechanism 16.

As well as slowing down the first gearshaft 14, the controller can also speed up the first gearshaft 14 so that the shaft speeds fall within the predetermined range. This would be appropriate in an instance when the engine was idling at minimum speed and the vehicle was still rolling. In such an instance, the controller can momentarily engage the third clutch mechanism 62, bringing the output gear 60 and the first gear 20a into contact. This contact utilises the rotation of the second gearshaft 20 caused by the motion of the vehicle to speed up the first gear 20a, which in turns speeds up the first gearshaft 14 through its engagement with first gear 20a.

Rather than locking the shift selector in the first gear position until the gearshaft speeds are synchronised, the present invention allows the operator to move the shift selector out of the first gear position and towards the desired second, new gear position. If the shaft speeds are not within the predetermined range that indicates substantial synchronisation, the shift prevention mechanism will hold the selector out of the second gear until the shaft speeds synchronise. In this way, operator fatigue is reduced as the operator can still move the selector out of the first gear position without encountering any resistance. As the shift selector is therefore already moving towards the second gear position, any resistance from the shift hold mechanism of the present invention will be reduced compared to when trying to move the selector from rest against a locking mechanism, as disclosed in the aforementioned prior art.

The first gearshaft of the present invention is preferably a layshaft. However, it should be appreciated that the present invention is not limited to the specific use of a layshaft for the first gearshaft.

Whilst the embodiment of the present invention described above has a number of both forward and reverse gears, the invention is equally applicable to a gearbox having multiple forward gears and only one reverse gear.

Throughout this specification, reference is made to shifting from a first gear to a second gear. For the avoidance of doubt, this does not mean that the invention exclusively relates to shifting between the first and second gears on the second gearshaft. The invention applies to shifts between any of the gears on the second gearshaft.

The shift selector of the illustrated embodiment is comprised of a number of shift rods and a manually-operated gearstick. However, it will be appreciated by those skilled in the art that the shift selector may only comprise one or more shift rods if need be. Furthermore, the shift selector is not limited to the inclusion of a gearstick, although this is preferable. Instead, any other means of manual, semi-automatic or automatic selection of gears may comprise part of the shift selector.

Although the detent is illustrated as comprising a biased ball engaging a groove in the shift rod, the present invention is not limited to use of this specific detent arrangement. Any other suitable detent arrangement may be employed to hold the shift rod.

Finally, whilst the shaft upon which the first and second clutch mechanisms are located has been described in the illustrated embodiment as the power input shaft, it is also possible for that shaft to act as the power output shaft. In other words, the gearbox of the present invention could be used in the opposite arrangement to that described, with the first and second clutch mechanisms located on a power output shaft, and the second gearshaft acting as the power input shaft. In such an instance, there would be no need for the output gear and output shaft described above.

These and other modifications and improvements may be incorporated without departing from the scope of the invention.

## Claims

1. A method of shifting from a first gear (20a) to a second gear (20b) in a gearbox (10) comprising a shift selector, a first clutch mechanism (16), a first gearshaft (14), and a second gearshaft (20) selectively engagable with the first gearshaft (14), the method comprising:
receiving a shift signal from the shift selector as the selector is moved from a first shift position corresponding with engagement of the first gear (20a) towards a second shift position corresponding with engagement of the second gear (20b);
holding the shift selector so as to prevent entry of the shift selector into the second shift position;
comparing the rotational speeds of the first gearshaft (14) and second gearshaft (20) of the gearbox (10);
determining whether the rotational speeds of the shafts (14,20) are within a predetermined range of one another;
releasing the shift selector once the rotational speeds of the shafts (14,20) are within the predetermined range, so that the shift selector may move into the second shift position; and
shifting the gearbox (10) from the first gear (20a) to the second gear (20b).

2. The method of Claim 1, wherein the shift selector comprises at least one shift rod (44), and the step of holding the shift selector comprises applying a detent to prevent movement of the shift rod (44).

3. The method of Claim 2, wherein the shift selector further comprises a gearstick selectively connected to the shift rod (44), and the movement of the shift selector is effected by manual operation of the gearstick.

4. The method of either preceding claim, further comprising the step of adjusting the speed of the first gearshaft (14) so that the shaft speeds are within the predetermined range if the determining step determines that the speeds are outside the predetermined range.

5. The method of Claim 4, wherein the gearbox (10) further comprises a power input shaft (12) and the first clutch mechanism (16) is adapted to effect the selective engagement of the power input shaft (12) with the first gearshaft (14) and cause rotation of the first gearshaft (14) in a first direction; and wherein the gearbox (10) further comprises a second clutch mechanism (18) adapted to effect selective engagement of the power input shaft (12) with the first gearshaft (14) and cause rotation of the first gearshaft (14) in a second direction opposite to the first direction;
and wherein the step of adjusting the speed of the first gearshaft (14) comprises either selectively engaging the first clutch mechanism (16) when the first gears haft (14) is rotating in the second direction, or selectively engaging the second clutch mechanism (18) when the first gearshaft (14) is rotating in the first direction.

6. The method of Claim 5, wherein the gearbox (10) further comprises a third clutch mechanism (62) located on the second gearshaft (20) and adapted to selectively engage the second gearshaft (20) with the first gearshaft (14), and wherein the step of adjusting the speed of the first gearshaft (14) comprises selectively engaging the third clutch mechanism (62) to increase the speed of the first gearshaft (14).

7. The method of Claim 4, wherein the gearbox (10) further comprises a power output shaft and the first clutch mechanism (16) is adapted to effect the selective engagement of the power output shaft with the first gearshaft (14) and cause rotation of the power output shaft in a first direction; and wherein the gearbox (10) further comprises a second clutch mechanism (18) adapted to effect selective engagement of the power output shaft with the first gearshaft (14) and cause rotation of the power output shaft in a second direction opposite to the first direction;
and wherein the step of adjusting the speed of the first gearshaft (14) is effected by either selectively engaging the first clutch mechanism (16) when the power output shaft is rotating in the second direction, or selectively engaging the second clutch mechanism (18) when the power output shaft is rotating in the first direction.

8. The method of Claim 1, further comprising the step of adjusting the speed of the second gearshaft (20) so that the shaft speeds are within the predetermined range if the determining step determines that the speeds are outside the predetermined range.

9. A gearbox (10) having at least two gears (20a,20b) and comprising:
a shift selector;
a first clutch mechanism (16);
a first gearshaft (14);
a second gearshaft (20) selectively engagable with the first gearshaft (14) via the at least two gears (20a,20b);
a shift prevention mechanism adapted to hold the shift selector so as to prevent entry of the shift selector into a second position corresponding with the engagement of a second gear (20b) from a first position corresponding with the engagement of a first gear (20a) unless the rotational speeds of the first gearshaft (14) and second gearshaft (20) are within a predetermined range; and
a controller adapted to control the shift prevention mechanism.

10. The gearbox of Claim 9, wherein the shift prevention mechanism comprises:
a position sensor adapted to determine the position of the shift selector;
first and second speed sensors adapted to determine the rotational speeds of the first gearshaft (14) and second gearshaft (20), respectively; and
a shift hold means adapted to selectively hold and release the shift selector;
wherein the controller is adapted to receive information from the sensors and to engage the shift hold means when the rotational speeds of the first gearshaft (14) and second gearshaft (20) are outside the predetermined range such that the shift selector is prevented from entering the second shift position, and release the shift hold means when the rotational speeds of the first gearshaft (14) and second gearshaft (20) are within the predetermined range.

11. The gearbox of Claim 10, wherein the shift selector comprises at least one shift rod (44), and wherein the shift hold means is a detent adapted to selectively engage the shift rod (44) so as to prevent movement thereof.

12. The gearbox of Claim 11, wherein the detent is electrically actuated.

13. The gearbox of Claim 11, wherein the detent is hydraulically actuated.

14. The gearbox of any of Claims 11 to 13, wherein the shift selector further comprises a manually-operated gearstick selectively connected to the shift rod (44).

15. The gearbox of any of Claims 9 to 14, further comprising a power input shaft (12) and the first clutch mechanism (16) is adapted to effect the selective engagement of the power input shaft (12) with the first gearshaft (14) and cause rotation of the first gearshaft (14) in a first direction; and wherein the gearbox (10) further comprises a second clutch mechanism (18) adapted to effect the selective engagement of the power input shaft (12) with the first gearshaft (14) and cause rotation of the first gearshaft (14) in a second direction opposite to the first direction;
wherein the controller is adapted to adjust the speed of the first gearshaft (14) by either selectively engaging the first clutch mechanism (16) when the first gearshaft (14) is rotating in the second direction, or selectively engaging the second clutch mechanism (18) when the first gearshaft (14) is rotating in the first direction.

16. The gearbox of Claim 15, further comprising a third clutch mechanism (62) located on the second gearshaft (20) and adapted to selectively engage the second gearshaft (20) with the first gearshaft (14), wherein the controller is adapted to selectively engage the third clutch mechanism (62) to increase the speed of the first gearshaft (14).

17. The gearbox of Claim 15, further comprising a power output shaft, and the first clutch mechanism (16) is adapted to effect the selective engagement of the power output shaft with the first gearshaft (14) and cause rotation of the power output shaft in a first direction; and wherein the gearbox (10) further comprises a second clutch mechanism (18) adapted to effect the selective engagement of the power output shaft with the first gearshaft (14) and cause rotation of the power output shaft in a second direction opposite to the first direction;
wherein the controller is adapted to adjust the speed of the first gearshaft (14) by either selectively engaging the first clutch mechanism (16) when the power output shaft is rotating in the second direction, or selectively engaging the second clutch mechanism (18) when the power output shaft is rotating in the first direction.

18. A vehicle including the gearbox of any of Claims 9 to 17.
